# EUROPÄISCHE PATENTSCHRIFT

(11) **EP 3 641 979 B1**
(45) Veröffentlichungstag und Bekanntmachung des Hinweises auf die Patenterteilung: **27.03.2024**
(21) Anmeldenummer: 18765872.9
(22) Anmeldetag: 06.09.2018
(51) Int. Cl.: G01L 5/00, B23K 11/25, B23K 11/11, B23K 11/31

(54) **VERFAHREN UND VORRICHTUNG ZUR MESSUNG EINER ELEKTRODENKRAFT EINER SCHWEISSZANGE**
METHOD AND DEVICE FOR MEASURING AN ELECTRODE CLAMPING FORCE OF AN ELECTRODE HOLDER
MÉTHODE ET DISPOSITIF POUR MESURER LA FORCE D'UNE ÉLECTRODE D'UNE PINCE À SOUDER

(30) Priorität: 12.09.2017 DE 102017121095
(43) Veröffentlichungstag der Anmeldung: 29.04.2020
(73) Patentinhaber: Matuschek Messtechnik GmbH, 52477 Alsdorf (DE)
(72) Erfinder: HEINEMANN, Axel, 52070 Aachen (DE); PIEREDNIK, Christoph, 52080 Aachen (DE); LANGE, Elmar, 51647 Gummersbach (DE)
(74) Vertreter: Freischem & Partner Patentanwälte mbB
(86) Internationale Anmeldenummer: PCT/EP2018/074025
(87) Internationale Veröffentlichungsnummer: WO 2019/052892

(56) Entgegenhaltungen:
- EP-A1- 2 243 585
- WO-A1-03/008146
- DE-A1- 10 338 176
- JP-A- 2002 096 177
- Kugi Et Al.: "Modelbildung", , 31. Dezember 2013 (2013-12-31), XP055367696, Gefunden im Internet: URL:http://www.acin.tuwien.ac.at/fileadmin /cds/lehre/mblg/Archiv/Modellbildung_2013. pdf [gefunden am 2017-04-26]

## Beschreibung

Die Erfindung betrifft ein Verfahren zur Verbesserung der Signalqualität einer an einer Schweißzange gemessenen Elektrodenkraft gemäß dem Oberbegriff des Anspruchs 1. Insbesondere handelt es sich um ein Verfahren zur Verbesserung der Signalqualität der zwischen Elektroden und zu schweißendem Gegenstand wirkenden und erfassten Kraft beim Widerstandsschweißen und Punktschweißen. Die Erfindung betrifft auch eine Schweißzange gemäß dem Oberbegriff des Anspruchs 5.

Zur Überwachung der Qualität einer Schweißung eines Werkstückes wird neben weiteren Parametern wie Schweißstrom und Schweißspannung üblicherweise die auf die Schweißelektroden wirkende Kraft gemessen. Die Elektroden sind an einer Schweißzange befestigt und werden zum Schweißen mit einer vorgegebenen Kraft gegen das Werkstück gepresst. Diese Klemmkraft soll während des Schweißens erfasst werden.

Aus der Druckschrift DE 103 38 176 A1 ist ein Verfahren und eine Vorrichtung zum Steuern der Andruckkraft einer Schweißzange bekannt, wobei mittels an der Schweißzange angebrachten Kraft-Sensoren die von der Schweißzange aufgebrachte Kraft gemessen und mit einer gewünschten Soll-Kraft verglichen wird. Bei einer Abweichung kann z.B. ein Elektromotor zum Antrieb der Schweißzange entsprechend nachgeregelt werden.

Die Druckschrift JP 2002 096 177 A, welche die Basis für den Oberbegriff des Anspruchs 5 bildet, beschreibt ein Verfahren zur Positionskorrektur für eine Schweißzange. Dabei werden beim Einklemmen des Werkstücks zwischen den Elektroden die auf die Elektroden wirkenden Kräfte gemessen und die Zangenposition in Richtung der Elektrode mit der größeren Kraft verlagert. Eine weitere Schweißzange mit Kraftsensoren zur Vermeidung von Fehlpositionierungen ist aus der WO 03/008146 A1 bekannt.

Die Aufgabe der Erfindung ist es, ein Verfahren zur Verbesserung der Signalqualität einer an einer Schweißzange gemessenen Elektrodenkraft zur Verfügung zu stellen.

Es wird ein Verfahren gemäß Anspruch 1 vorgeschlagen.

Das erfindungsgemäße Verfahren hat zum Ziel, die Signale aufgrund der Klemmkraft der Elektroden von den Signalen der von außen auf das Werkstück aufgebrachten Kräften zu trennen. Die Elektrodenkraft oder Klemmkraft, die ausgehend von einem Zangenantrieb über die Elektrodenarme und die Elektroden auf ein zu verschweißendes Werkstück wirkt, erzeugt an der Oberfläche der ersten Elektrode und an der Oberfläche der zweiten Elektrode nach außen wirkende Kräfte, das heißt Kräfte, die auf die Elektrodenoberflächen in axialer Richtung der Elektrodenachsen zu den Elektrodenhaltern an der Zange hin wirken.

Eine etwaige Störkraft Fs, die beispielsweise durch eine von außen in das Werkstück eingeleitete Bewegung oder Schwingung verursacht wird, bewegt das Werkstück auf die eine Elektrode zu und von der anderen Elektrode weg und erzeugt so an der Oberfläche der einen Elektrode eine Zunahme der Kraft (+Fs) und an der Oberfläche der anderen Elektrode eine Abnahme der Kraft (-Fs). Die Beträge der Störkräfte (+Fs und -Fs) sind an den beiden Elektroden gleich. Solche Störkräfte treten üblicherweise beim gleichzeitigen Schweißen mit mehreren an dem Werkstück angreifenden Schweißzangen auf oder aufgrund anderer Werkzeuge oder Transportvorrichtungen, die das Werkstück bewegen. Die Störkräfte überlagern dabei das eigentliche beim Schweißen auftretende Kraftsignal und mindern die Signalqualität.

Bei einer Addition der ersten Kraft, die auf die Oberfläche der ersten Elektrode wirkt, und der zweiten Kraft, die auf die Oberfläche der zweiten Elektrode wirkt, addieren sich die jeweiligen Elektrodenkräfte aufgrund der gleichen Vorzeichen, und die Störkräfte heben sich aufgrund der unterschiedlichen Vorzeichen jeweils gegenseitig auf. Das Signal der Summe der zwei gemessenen Kräfte ist dann weitgehend frei von etwaigen von außen in das Werkstück eingebrachten Störkräften, und das Signal der Summe der zwei gemessenen Kräfte repräsentiert ausschließlich die zwischen dem Werkstück und den Elektroden wirkende Schweißkraft, wobei die Amplitude dieses Signals den doppelten Wert der auf die einzelne Elektrode wirkenden Kraft hat. Das erfindungsgemäße Verfahren verbessert die Signalqualität durch Beseitigung der Störsignale und Verdoppelung der Amplitude und kann besonders einfach durchgeführt werden, indem nur eine simple Addition zweier gemessener Kraftsignale durchgeführt wird.

In einer praktischen Ausführungsform des erfindungsgemäßen Verfahrens wird als Schweißzange eine X-Zange verwendet. X-Zangen dienen dazu, schwer zugängliche Schweißpunkte zu erreichen. Zu diesem Zweck erstrecken sich die Elektrodenarme einer X-Zange über eine erhebliche Länge rechtwinklig zur Elektrodenachse und weisen eine geringe Biegesteifigkeit auf. Die von außen in das Werkstück eingebrachten Störkräfte können das schwache Signal der Elektrodenkraft erheblich verfälschen. Das erfindungsgemäße Verfahren ist in Verbindung mit X-Zangen besonders vorteilhaft, weil sich die bei X-Zangen relativ großen Störkraftsignale reduzieren oder beseitigen lassen. Auch bei C-Zangen kann das hier beschriebene Verfahren die Signalqualität verbessern. Bei X-Zangen kann das Kraftsignal durch Dehnungssensoren an den Zangenarmen erfasst werden. Bei C-Zangen kann das Kraftsignal durch Drucksensoren, z.B. Piezosensoren an den Elektrodenhaltern erfasst werde.

Die Messung der ersten Kraft kann in der Praxis mittels mindestens eines ersten Sensors an dem ersten Elektrodenarm erfolgen und die Messung der zweiten Kraft mittels mindestens eines zweiten Sensors an dem zweiten Elektrodenarm. Vorzugsweise sind der erste Sensor und der zweite Sensor jeweils in einem Bereich der sich horizontal erstreckenden Abschnitte der Elektrodenarme angeordnet. Insbesondere sind der erste Sensor und der zweite Sensor auf den den Elektroden abgewandten Seiten der Elektrodenarme angeordnet. Die axial auf die Elektroden wirkende Kraft kann besonders gut an den sich quer zu den Elektroden erstreckenden Elektrodenarmen detektiert werden, die sich durch die Elektrodenkraft elastisch verformen. Eine derartige Verformung lässt sich auf der konvex gebogenen Seite eines Elektrodenarms als Längenausdehnung und auf der konkav gebogenen Seite als Stauchung messen und in einen Kraftwert umrechnen. Alternativ können die Sensoren auch jeweils direkt im Bereich der Elektrodenhalter, welche an den Enden der Elektrodenarme befestigt sind angeordnet und als Drucksensoren ausgebildet sein.

Es ist auch möglich, mehr als einen Sensor für jede Elektrode zu verwenden, beispielsweise einen Sensor an der Außenseite des Elektrodenarms und ein zweiter Sensor an dessen Innenseite. Auch können Dehnsensoren am Zangenarm mit Drucksensoren am Elektrodenhalter oder an den Antriebsmotoren, welche das zur Elektrodenkraft äquivalente Drehmoment erfassen, kombiniert werden.

Als Sensoren eigenen sich insbesondere ein Piezosensor und/oder ein Dehnungsmessstreifen. Mittels eines Piezosensors oder eines Dehnungsmessstreifen kann in einfacher Weise eine kraftinduzierte Längenänderung im Bereich der Elektrodenarme detektiert werden. Piezosensoren können auch unmittelbar ein Drucksignal erfassen. Piezosensoren und Dehnungsmessstreifen sind leicht anzuwendende Sensoren. Die verwendeten Sensoren sind so zu kalibrieren das Sie bei gleichem Betrag der auf die Elektrodenoberfläche wirkenden Kraft einen gleich hohen Signalausschlag bewirken.

Die Erfindung betrifft auch eine Schweißzange gemäß Anspruch 5.

Jeder Sensor misst dabei ein für die Kraft, die auf die Elektrodenoberfläche in der Regel in axialer Richtung wirkt, repräsentatives Signal. Mit anderen Worten, lässt sich das gemessene Signal jedes Sensors auf der Grundlage fester Umrechnungsregeln in eine Kraft umrechnen, die axial in die Elektrode eingeleitet wird. Der Sensor kann ein Piezosensor an dem Elektrodenhalter oder an dem Elektrodenarm sein, der ein zu der axialen Kraft auf die Elektrode proportionales Messsignal abgibt. Der Sensor kann aber auch ein Dehnungsmesselement sein, das die Dehnung auf der Oberseite oder auf der Unterseite des Elektrodenarms misst. Als Dehnungsmesselement kommt ein Dehnungsmesstreifen in Frage oder wiederum ein Piezosensor, der zwischen zwei an der Oberfläche des Elektrodenarms befestigten Halteelementen befestigt ist. Es können auch verschiedene Sensoren für die Kraftmessung an den beiden verschiedenen Elektroden einer Schweißzange vorgesehen sein. Durch Eichung der Messsensoren und ihrer Auswertungselektronik können die Messsignale auf absolute Kraftwerte umgerechnet werden.

Das gemessene erste Kraftsignal und das gemessene zweite Kraftsignal werden in der Praxis mittels einer Kabelverbindung an eine Auswertungselektronik zur Berechnung der korrigierten Kraft geleitet. Eine Übertragung per Kabel lässt sich gut gegenüber den bei der Schweißung auftretenden elektromagnetischen Feldern abschirmen.

In einer praktischen Ausführungsform ist die erfindungsgemäße Schweißzange eine X-Schweißzange. Wie bereits vorstehend erläutert, ist das Signal der Elektrodenkraft bei einer elastisch biegbaren X-Schweißzange relativ schwach, so dass die Verbesserung der Signalqualität durch Auslöschen der Störsignale wichtig ist.

Zur Messung der Elektrodenkraft kann der mindestens eine Sensor an dem jeweiligen Elektrodenarm an mindestens einer der folgenden Positionen angeordnet sein:
- im Bereich eines Antriebsmotors,
- im Bereich eines sich horizontal erstreckenden Abschnitts,
- im Bereich eines Elektrodenhalters.

In jedem dieser drei Bereiche können die auf die Elektroden wirkenden Kräfte gemessen werden. Eine über die Oberfläche der Elektrode axial einwirkende Kraft wird durch die Elektrode auf den Elektrodenhalter und von diesem auf die Elektrodenarme übertragen, die wiederum von dem Antriebsmotor in der an das Werkstück gedrückten Stellung gehalten werden. Die Kraft drückt folglich auf den Elektrodenhalter, verbiegt elastisch die Zangenarme und wird durch das Drehmoment des Antriebsmotors gehalten.

Wie bereits vorstehend erläutert, können als Sensoren vorzugsweise ein Piezosensor und/oder ein Dehnungsmessstreifen eingesetzt werden.

Weitere praktische Ausführungsformen und Vorteile der Erfindung sind nachfolgend im Zusammenhang mit den Zeichnungen beschrieben. Es zeigen:
- Fig. 1: eine erfindungsgemäße Schweißzange in einer Seitenansicht,
- Fig. 2: eine schematische Darstellung der auf die Elektroden einer Schweißzange wirkenden Kräfte,
- Fig. 3: eine schematische Darstellung der Signale der ersten Elektrodenkraft und der zweiten Elektrodenkraft und der addierten Elektrodenkräfte.

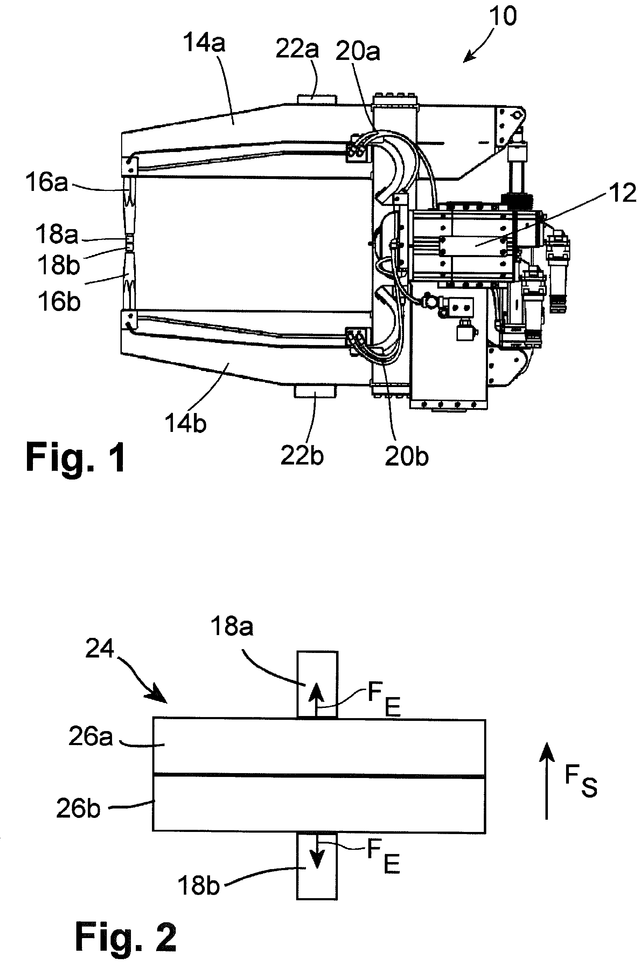

In Fig. 1 ist eine erfindungsgemäße Schweißzange 10 gezeigt. Bei der Schweißzange 10 handelt es sich hier um eine X-Zange.

Ausgehend von einem Antriebsmotor 12 erstrecken sich in horizontaler Richtung ein erster Elektrodenarm 14a und ein zweiter Elektrodenarm 14b. Der erste Elektrodenarm 14a und der zweite Elektrodenarm 14b sind einander gegenüberliegend angeordnet und verlaufen zueinander parallel. An dem freien Ende des ersten Elektrodenarms 14a ist ein erster Elektrodenhalter 16a mit einer daran befestigten ersten Elektrode 18a angeordnet, und an dem zweiten Elektrodenarm 14b ein zweiter Elektrodenhalter 16b mit einer zweiten Elektrode 18b angeordnet. Die Elektroden 18a, 18b dienen zum Widerstandsschweißen oder Punktschweißen eines Werkstückes (nicht dargestellt). Das Werkstück besteht meist aus zwei oder mehreren miteinander zu verschweißenden Blechen. Die Elektrodenarme 14a, 14b erstrecken sich rechtwinklig zu den Achsen der Elektroden 18a, 18b.

Ferner weist die Schweißzange mehrere Anschlüsse, unter anderem einen Stromanschluss 20 für die Elektroden 18a, 18b auf.

An der Oberseite eines von der Elektrode 16a entfernten Abschnitts ersten Elektrodenarms 14a ist ein erster Sensor 22a angeordnet und an der Unterseite eines von der Elektrode 16b entfernten Abschnitts des zweiten Elektrodenarms 14b ist ein zweiter Sensor 22b angeordnet. Bei dem ersten Sensor 22a und dem zweiten Sensor 22b handelt es sich vorliegend jeweils um einen Piezosensor, mittels welchem die elastische Durchbiegung der Elektrodenarme 14a, 14b messbar ist. Aus dem Messsignal kann ein korrespondierendes Kraftsignal ermittelt werden.

Das erfindungsgemäße Verfahren wird im Folgenden in Zusammenhang mit Fig. 2 beschrieben. In Fig. 2 sind nur erste Elektrode 18a und die zweite Elektrode 18b abgebildet. Zwischen der ersten Elektrode 18a und der zweiten Elektrode 18b ist ein zu verschweißendes Werkstück 24 eingeklemmt. Das Werkstück 24 umfasst zwei miteinander zu verschweißende Bleche 26a und 26b.

Ausgehend von dem Antriebsmotor 12 wird über die Elektrodenarme 14a, 14b und über die Oberflächen der Elektroden 18a, 18b beim Verschweißen eine permanente Elektrodenkraft F_{E} auf das Werkstück 24 ausgeübt. Die Kraft F_{E} bewirkt eine spezifische elastische Verformung jeweils beider Elektrodenarme 14a, 14b, welche mittels des ersten Sensors 22a und des zweiten Sensors 22b messbar ist und in einen Kraftwert umgerechnet werden kann.

Dagegen wirkt eine äußere Störkraft Fs durch eine Verlagerung des Werkstücks 24 auf die Oberflächen der beiden Elektroden 18a, 18b in entgegengesetzter Richtung. Die in Fig. 2 nach oben wirkende Störkraft Fs bewirkt in dem vorliegenden Fall, dass das Werkstück 24 in Richtung der ersten, oben liegenden Elektrode 18a bewegt wird und die Kraft auf die erste Elektrode 18a ansteigt, wobei gleichzeitig die Kraft auf die zweite, unten liegende Elektrode 18b um denselben Betrag reduziert wird. Die Sensoren 22a, 22b sind so geeicht, dass jeweils auf die Oberfläche der an dem Elektrodenarm 14a, 14b angeordneten Elektrode 18a, 18b wirkende Druckkräfte das gleiche Vorzeichen haben. Damit hat das Signal der beiden Sensoren 22a, 22b aufgrund der Störkraft Fs ein entgegengesetztes Vorzeichen. Beim Addieren der beiden Kraftwerte heben sich die Signalanteile aufgrund der Störkraft Fs folglich auf.

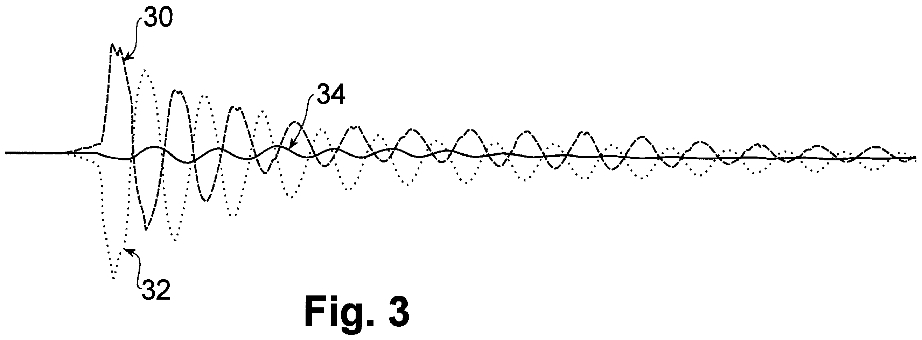

In Fig. 3 ist eine Messung dargestellt, aus der dieses Prinzip hervorgeht. Es sind drei Linien gezeigt, wobei die erste Linie 30 (gestrichelt) der gemessenen ersten Kraft an dem ersten Sensor 22a entspricht, die zweite Linie 32 (gepunktet) der zweiten Kraft an dem zweiten Sensor 22b entspricht und die dritte Linie 34 (durchgehend) dem halben Wert der addierten ersten Kraft und zweiten Kraft entspricht.

Wie gut zu erkennen ist, weisen die erste Linie 30 und die zweite Linie 32 keinen konstanten Kraftverlauf sondern starke Kraftschwankungen auf. Diese sind auf Störkräfte zurückzuführen, die von außen über das Werkstück 24 auf die Elektroden 14a, 14b wirken und von dem ersten Sensor 22a und dem zweiten Sensor 22b gemessen werden. Bei der in Fig. 3 dargestellten Messung wurde auf das Werkstück von außen ein Kraftimpuls aufgebracht, der das Werkstück in Schwingungen versetzt. Die erste Linie 30 und die zweite Linie 32 weisen im Wesentlichen entgegengesetzte Ausschläge auf.

Die dritte Linie 34 zeigt die Summe aus der ersten Kraft (Linie 30) und der zweiten Kraft (Linie 32), wobei die Summe zudem durch zwei geteilt wurde, um in demselben Wertebereich wie die erste Linie 30 und die zweite Linie 32 zu liegen. Wie gut zu erkennen ist, ist die Summenlinie 34 wesentlich glatter und konstanter als die erste Linie 30 und die zweite Linie 32. Aufgrund der gegensätzlichen Vorzeichen der Störkräfte Fs löschen diese sich jeweils gegenseitig aus, die Elektrodenkräfte F_{E} mit gleichem Vorzeichen addieren sich.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt, sondern kann im Rahmen der Ansprüche und unter Berücksichtigung der Kenntnisse des zuständigen Fachmanns variiert werden.

### Bezugszeichen liste

- 10: Schweißzange
- 12: Antriebsmotor
- 14a, 14b: Elektrodenarm
- 16a, 16b: Elektrodenhalter
- 18a, 18b: Elektrode
- 20a, 20b: Anschlüsse
- 22a, 22b: Sensor
- 24: Werkstück
- 26a, 26b: Blech
- 30: Linie
- 32: Linie
- 34: Linie

## Patentansprüche

1. Verfahren zur Verbesserung der Signalqualität einer an einer Schweißzange während der Schweißung gemessenen Elektrodenkraft, wobei die Schweißzange (10) einen ersten Elektrodenarm (14a) mit einer ersten Elektrode (18a) und einen dem ersten Elektrodenarm (14a) gegenüberliegenden zweiten Elektrodenarm (14b) mit einer zweiten Elektrode (18b) aufweist, wobei mindestens ein Werkstück (24) zwischen den Elektroden (18a, 18b) eingeklemmt ist, mit folgenden Verfahrensschritten:
a) Messen einer auf die erste Elektrode (18a) wirkenden ersten Kraft,
b) Messen einer auf die zweite Elektrode (18b) wirkenden zweiten Kraft,
c) Addieren der gemessenen ersten Kraft und der gemessenen zweiten Kraft, wobei sich ein von der Schweißstelle auf die Elektroden (18a, 18b) übertragenes Elektrodenkraftsignal verstärkt und ein von außen in das mindestens eine Werkstück (24) eingeleitetes und auf die Elektroden (18a, 18b) übertragenes Störkraftsignal auslöscht.

2. Verfahren nach dem vorstehenden Anspruch, **dadurch gekennzeichnet, dass** als Schweißzange (10) eine X-Zange verwendet wird.

3. Verfahren nach einem der vorstehenden Ansprüche, **dadurch gekennzeichnet, dass** die Messung der ersten Kraft mittels mindestens eines ersten Sensors (22a) an dem ersten Elektrodenarm (14a) erfolgt und dass die Messung der zweiten Kraft mittels mindestens eines zweiten Sensors (22b) an dem zweiten Elektrodenarm (14b) erfolgt.

4. Verfahren nach dem vorstehenden Anspruch, **dadurch gekennzeichnet, dass** der Sensor (22a, 22b) aus folgender Gruppe ausgewählt ist: Piezosensor, Dehnungsmessstreifen.

5. Schweißzange mit einem ersten Elektrodenarm (14a) mit einer ersten Elektrode (18a) und einem zweiten Elektrodenarm (14b) mit einer zweiten Elektrode (18b), wobei an dem ersten Elektrodenarm (14a) mindestens ein erster Sensor (22a) zur Messung einer während der Schweißung auf die erste Elektrode (18a) wirkenden Kraft angeordnet ist und an dem zweiten Elektrodenarm (14b) mindestens ein zweiter Sensor (22b) zur Messung einer während der Schweißung auf die zweite Elektrode (18b) wirkenden Kraft angeordnet ist, wobei die Messsignale des ersten Sensors (22a) und des zweiten Sensors (22b) zu einer Auswertungselektronik geleitet werden, **dadurch gekennzeichnet, dass** die Auswertungselektronik dazu eingerichtet ist, die Signalqualität der an der Schweißzange gemessenen Elektrodenkraft zu verbessern, indem die gemessene erste Kraft und die gemessenen zweite Kraft addiert werden, wobei sich ein von der Schweißstelle auf die Elektroden (18a, 18b) übertragenes Elektrodenkraftsignal verstärkt und ein von außen in das mindestens eine Werkstück (24) eingeleitetes und auf die Elektroden (18a, 18b) übertragenes Störkraftsignal auslöscht.

6. Schweißzange nach dem vorstehenden Anspruch, **dadurch gekennzeichnet, dass** es sich um eine X-Schweißzange handelt.

7. Schweißzange nach Anspruch 5 oder 6, **dadurch gekennzeichnet, dass** der mindestens eine Sensor (22a, 22b) an dem jeweiligen Elektrodenarm (14a, 14b) an mindestens einer der folgenden Positionen angeordnet ist:
- im Bereich eines Antriebsmotors (12),
- im Bereich eines im Bereich eines sich horizontal erstreckenden Abschnitts,
- im Bereich eines Elektrodenhalters (16a, 16b).

8. Schweißzange nach einem der Ansprüche 5 bis 7, **dadurch gekennzeichnet, dass** der Sensor (22a, 22b) aus folgender Gruppe ausgewählt ist: Piezosensor, Dehnungsmessstreifen.

## Claims

1. A method for improving the quality of a signal of an electrode force measured on welding tongs (10) during the welding process, wherein the welding tongs (10) have a first electrode arm (14a) with a first electrode (18a) and a second electrode arm (14b) which is opposite the first electrode arm (14a) and has a second electrode (18b), wherein at least one workpiece (24) is clamped between the electrodes (18a, 18b), having the following method steps of:
a) measuring a first force acting on the first electrode (18a),
b) measuring a second force acting on the second electrode (18b),
c) adding the measured first force and the measured second force, wherein an electrode force signal transmitted from the welding point to the electrodes (18a, 18b) is amplified and a disturbance force signal introduced into the at least one workpiece (24) from the outside and transmitted to the electrodes (18a, 18b) is eliminated.

2. The method as claimed in the preceding claim, **characterized in that** X-tongs are used as the welding tongs (10).

3. The method as claimed in one of the preceding claims, **characterized in that** the first force is measured by means of at least one first sensor (22a) on the first electrode arm (14a), and **in that** the second force is measured by means of at least one second sensor (22b) on the second electrode arm (14b).

4. The method as claimed in the preceding claim, **characterized in that** the sensor (22a, 22b) is selected from the following group: piezo sensor, strain gage.

5. Welding tongs having a first electrode arm (14a) with a first electrode (18a) and having a second electrode arm (14b) with a second electrode (18b), wherein at least one first sensor (22a) for measuring a force acting on the first electrode (18a) during the welding process is arranged on the first electrode arm (14a), and at least one second sensor (22b) for measuring a force acting on the second electrode (18b) during the welding process is arranged on the second electrode arm (14b), wherein the measurement signals from the first sensor (22a) and from the second sensor (22b) are passed to evaluation electronics, **characterized in that** the evaluation electronics is configured to improve the quality of the signal of the electrode force measured at the welding tongs by adding the measured first force and the measured second force, wherein an electrode force signal transmitted from the welding point to the electrodes (18a, 18b) is amplified and a disturbance force signal introduced into the at least one workpiece (24) from the outside and transmitted to the electrodes (18a, 18b) is eliminated.

6. The welding tongs as claimed in the preceding claim, **characterized in that** the welding tongs are X-welding tongs.

7. The welding tongs as claimed in claim 5 or 6, **characterized in that** the at least one sensor (22a, 22b) is arranged on the respective electrode arm (14a, 14b) at at least one of the following positions:
- in the region of a drive motor (12),
- in the region of a horizontally extending section,
- in the region of an electrode holder (16a, 16b).

8. The welding tongs as claimed in one of claims 5 to 7, **characterized in that** the sensor (22a, 22b) is selected from the following group: piezo sensor, strain gage.

## Revendications

1. Procédé pour améliorer la qualité de signal d'une force d'électrode mesurée au niveau d'une pince à souder pendant le soudage, dans lequel la pince à souder (10) présente un premier bras d'électrode (14a) avec une première électrode (18a) et un second bras d'électrode (14b) opposé au premier bras d'électrode (14a) avec une seconde électrode (18b), dans lequel au moins une pièce à usiner (24) est serrée entre les électrodes (18a, 18b), comprenant les étapes de procédé suivantes :
a) mesurer une première force agissant sur la première électrode (18a),
b) mesurer une seconde force agissant sur la seconde électrode (18b),
c) additionner la première force mesurée et la seconde force mesurée, où un signal de force d'électrode transmis du point de soudage aux électrodes (18a, 18b) est amplifié et un signal de force d'interférence introduit depuis l'extérieur dans la au moins une pièce à usiner (24) et transmis aux électrodes (18a, 18b) est annulé.

2. Procédé selon la revendication précédente, **caractérisé en ce qu'**une pince en X est utilisée en tant que pince à souder (10).

3. Procédé selon l'une quelconque des revendications précédentes, **caractérisé en ce que** la mesure de la première force est effectuée au moyen d'au moins un premier capteur (22a) au niveau du premier bras d'électrode (14a) et **en ce que** la mesure de la seconde force est effectuée au moyen d'au moins un second capteur (22b) au niveau du second bras d'électrode (14b).

4. Procédé selon la revendication précédente, **caractérisé en ce que** le capteur (22a, 22b) est choisi dans le groupe suivant : capteur piézoélectrique, jauge de contrainte.

5. Pince à souder avec un premier bras d'électrode (14a) avec une première électrode (18a) et un second bras d'électrode (14b) avec une seconde électrode (18b), dans laquelle au moins un premier capteur (22a) est agencé au niveau du premier bras d'électrode (14a) pour mesurer une force agissant sur la première électrode (18a) pendant le soudage, et au moins un second capteur (22b) est agencé au niveau du second bras d'électrode (14b) pour mesurer une force agissant sur la seconde électrode (18b) pendant le soudage, où les signaux de mesure du premier capteur (22a) et du second capteur (22b) sont transmis à une électronique d'évaluation, **caractérisée en ce que** l'électronique d'évaluation est conçue pour améliorer la qualité de signal de la force d'électrode mesurée au niveau de la pince à souder en additionnant la première force mesurée et la seconde force mesurée, où un signal de force d'électrode transmis du point de soudage aux électrodes (18a, 18b) est amplifié et un signal de force d'interférence introduit dans au moins une pièce à usiner (24) depuis l'extérieur et transmis aux électrodes (18a, 18b) est annulé.

6. Pince à souder selon la revendication précédente, **caractérisée en ce qu'**il s'agit d'une pince à souder en X.

7. Pince à souder selon la revendication 5 ou 6, **caractérisée en ce que** le au moins un capteur (22a, 22b) est agencé au niveau du bras d'électrode respectif (14a, 14b) au niveau d'au moins l'une des positions suivantes :
- dans la zone d'un moteur d'entraînement (12),
- dans la zone d'une section s'étendant horizontalement dans la zone,
- dans la zone d'un porte-électrode (16a, 16b).

8. Pince à souder selon l'une quelconque des revendications 5 à 7, **caractérisée en ce que** le capteur (22a, 22b) est choisi dans le groupe suivant : capteur piézoélectrique, jauge de contrainte.
